# EUROPÄISCHE PATENTSCHRIFT

(11) **EP 0 762 185 B1**
(45) Veröffentlichungstag und Bekanntmachung des Hinweises auf die Patenterteilung: **29.01.2003**
(21) Anmeldenummer: 96113675.1
(22) Anmeldetag: 27.08.1996
(51) Int. Cl.: G03B 1/24, G03B 1/26

(54) **Fotografische Aufzeichnungs- oder Wiedergabevorrichtung**
Recording or reproducing device
Dispositif d'enregistrement ou de reproduction

(30) Priorität: 07.09.1995 DE 19533037
(43) Veröffentlichungstag der Anmeldung: 12.03.1997
(73) Patentinhaber: AGFA-GEVAERT, 2640 Mortsel (BE)
(72) Erfinder: Schröder, Rolf, 85604 Zorneding (DE)

(56) Entgegenhaltungen:
- DE-A- 3 133 774
- DE-A- 3 719 560
- GB-A- 621 072
- US-A- 4 022 525
- US-A- 5 312 304

## Beschreibung

Die Erfindung betrifft eine fotografische Aufzeichnungs- oder Wiedergabevorrichtung, vorzugsweise eine Kamera, mit den Merkmalen des Oberbegriffs des Patentanspruchs 1.

Es gibt zahlreiche Kameras mit einer Transporteinrichtung für den bildmäßigen Transport eines Filmes längs einer Filmtransportbahn und mit einer Filmablängeinrichtung mit einem um eine Achse drehbaren Eingriffsglied zum Eingriff in Perforationslöcher einer Randperforation des Filmes, wobei die Filmtransporteinrichtung gesperrt wird, wenn der Film im Zuge seines Transportes eine für die Aufnahme eines Bildes vorgesehene Position erreicht.

Kameras dieser Art sind überwiegend für die Verwendung von Filmkassetten des Konfektionierungssystems "135" eingerichtet und ermöglichen Einzelbild- oder Reihenbildaufnahmen. Bei diesem System besitzt der Film an jedem seiner beiden Längsränder Perforationslöcher, die jeweils untereinander einen relativ geringen gleichmäßigen Abstand aufweisen. Sie schaffen jedoch keinen unmittelbaren Bezug zur Positionierung der aufeinanderfolgenden fotografischen Aufnahmen auf dem Film. Es besteht daher keine feste oder vorbestimmte Zuordnung der einzelnen Aufnahmen zu bestimmten Perforationslöchern der Randperforation des Filmes. Zum schrittweisen Vorschub des Films dient eine Filmtransporteinrichtung in Verbindung mit einer Filmablängeinrichtung. Diese umfaßt ein Perforationsrad (nachfolgend auch kurz Perforrad genannt), das mit seinen Zähnen in die Filmperforation eingreift und entweder von der Betätigungseinrichtung für den Fimtransport oder aber durch den sich bewegenden Film selbst infolge des Eingriffs in dessen Perforation in Drehung versetzt wird und in Verbindung mit einem Getriebe die Länge des vom Film pro Aufnahme zurückgelegten Transportweges bestimmt.

Darüber hinaus sind Kameras bekannt, die für Filmkassetten der Konfektionierungssysteme "126" bzw. "110" eingerichtet sind. Bei diesen Systemen ist an einem der Filmränder jeweils ein einziges Perforationsloch pro Aufnahme vorgesehen, wobei jede Aufnahme positionsmäßig einen festen Bezug zu dem jeweils zugeordneten Perforationsloch hat. Zum schrittweisen Vorschub des Films wird in der Kamera die Bahn der Perforationslöcher mittels eines federnd anliegenden Abtasters abgetastet, wobei eine Sperreinrichtung der Kamera den Filmtransport stets dann sperrt, wenn der Abtaster in ein Perforationsloch einfällt. Bei oder nach Durchführung einer fotografischen Aufnahme wird der Abtaster aus dem jeweiligen Perforationsloch wieder ausgehoben, damit anschließend der Film um einen Bildschritt für die nächstfolgende Aufnahme oder nach der letzten Belichtung bis zum Filmende weitertransportiert werden kann.

Der Erfindung liegt die Aufgabe zugrunde, eine fotografische Aufzeichnungs- oder Wiedergabevorrichtung und vorzugsweise eine Kamera der eingangs genannten Art zu schaffen, bei welcher ein Film eines Systems mit fester Zuordnung von Bildpositionierung zu Perforationslöchern verwendet wird.

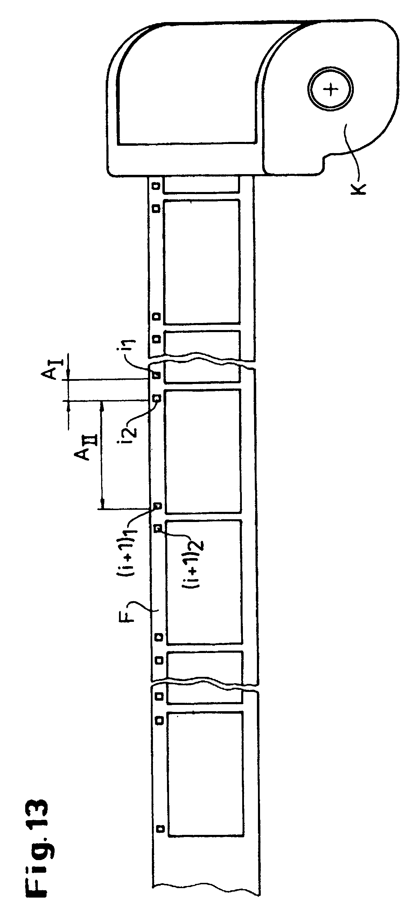

Vorzugsweise soll die erfindungsgemäße Vorrichtung zur Verwendung von Filmen einer Konfektionierungsart geeignet sein, wie sie in Fig. 13 der Zeichnungen schematisch dargestellt ist. Bei dieser Konfektionierungsart weist der aus einer Vorratskassette K herausschiebbare Film F an einem seiner beiden Längsränder pro Bildfeld jeweils zwei Perforationslöcher i₁, i₂ auf, die jeweils nahe dem Bildsteg zwischen zwei aufeinanderfolgenden Bildfeldern des Filmes in Transportrichtung gesehen hintereinander angeordnet sind. Zwischen den aufeinanderfolgenden Perforationslöchern eines jeden Perforationslochpaares i₁, i₂ liegt ein vergleichsweise geringer Abstand A_{I}, während der Abstand A_{II} zwischen dem zweiten Perforationsloch i₂ eines Perforationslochpaares i₁, i₂ eines Bildfeldes und dem ersten Perforationsloch (i+1)₁ des Perforationslochpaares (i+1)₁, (i+1)₂ des nächstfolgenden Bildfeldes vergleichsweise groß ist und fast der Länge eines Bildfeldes entspricht. Dabei gilt 1 < i < n-1, wenn n die Gesamtzahl der auf dem Film F vorgesehenen Bildfelder ausdrückt.

Erfindungsgemäß wird die vorgenannte Aufgabe mit den Merkmalen des kennzeichnenden Teils des Patentanspruchs 1 gelöst.

Weiterbildungen der Erfindung ergeben sich aus den Unteransprüchen.

Bevorzugte Ausführungsformen der Erfindung sind nachfolgend anhand von Fig. 1 bis 12 der Zeichnungen näher beschrieben.

In den Zeichnungen zeigen, jeweils in schematischer Darstellung,
- Fig. 1: eine erste Ausführungsform einer erfindungsgemäßen Kamera in der Ansicht von oben bei abgenommenem Gehäuseoberteil im Betriebszustand der Bereitschaft zur Durchführung einer fotografischen Aufnahme,
- Fig. 2: die Kamera gemäß Fig. 1 in der Ansicht von hinten bei abgenommenem Gehäuserückteil,
- Fig. 3: die Kamera gemäß Fig. 1 in der Ansicht von vorne bei abgenommenem Gehäusevorderteil,
- Fig. 4: einen Satz Schalträder der Kamera gemäß Fig. 1 in perspektivischer, auseinandergezogener Darstellung,
- Fig. 5: den Gegenstand von Fig. 1 im Betriebszustand unmittelbar nach der Durchführung einer fotografischen Aufnahme,
- Fig. 6: den Gegenstand von Fig. 1 im Betriebszustand des an eine bildmäßige Filmbelichtung zur Vorbereitung einer nächstfolgenden Aufnahme sich anschließenden Filmtransportes in einer ersten Zwischenstellung,
- Fig. 7: den Gegenstand von Fig. 1 im Betriebszustand des Filmtransportes in einer nachfolgenden zweiten Zwischenstellung,
- Fig. 8: den Gegenstand von Fig. 1 im Betriebszustand des Filmtransportes in einer nachfolgenden dritten Zwischenstellung,
- Fig. 9: den Gegenstand von Fig. 1 im Betriebszustand des Filmtransportes in einer nachfolgenden vierten Zwischenstellung kurz vor Erreichen der Position für die nächste Aufnahme,
- Fig. 10: Teile der Filmablängeinrichtung einer weiteren Ausführungsform einer erfindungsgemäßen Kamera im Betriebszustand unmittelbar nach Durchführung einer fotografischen Aufnahme,
- Fig. 11: den Gegenstand von Fig. 10 in einem nachfolgenden Betriebszustand während der anschließenden Transportbewegung des Filmes,
- Fig. 12: den Gegenstand von Fig. 10 im Betriebszustand, in dem der Film eine Position kurz vor dem Abschluß der Transportbewegung um einen Bildschritt erreicht hat, und
- Fig. 13: eine Filmkassette mit Film der oben beschriebenen Konfektionierungsart mit zwei Perforationslöchern pro Bildfeld.

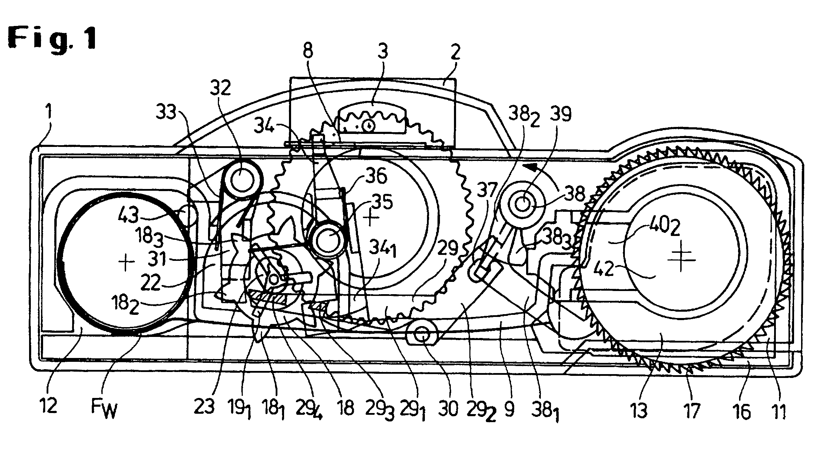

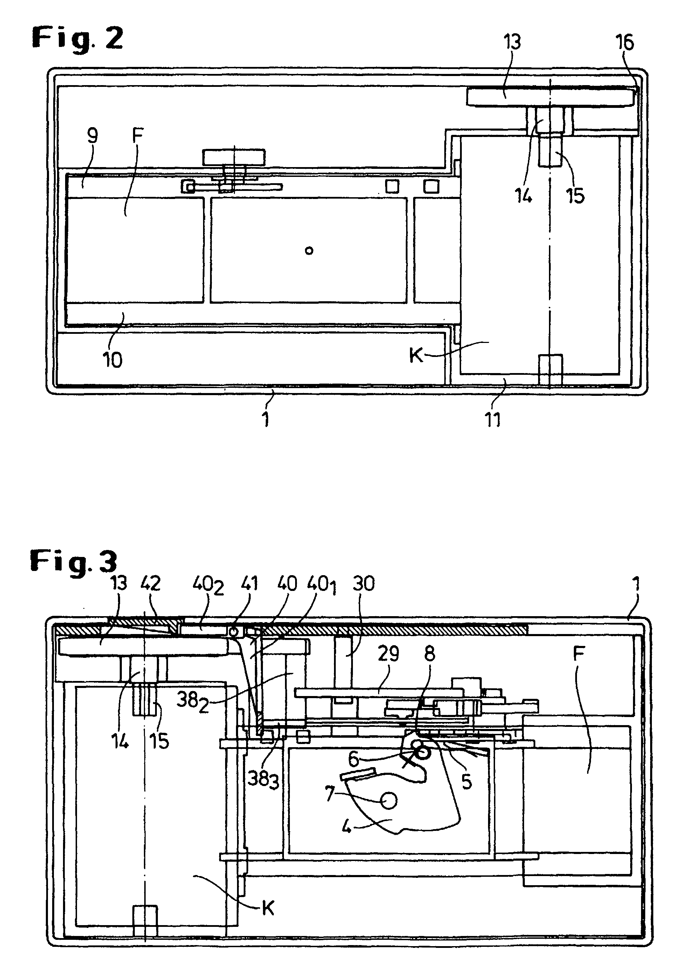

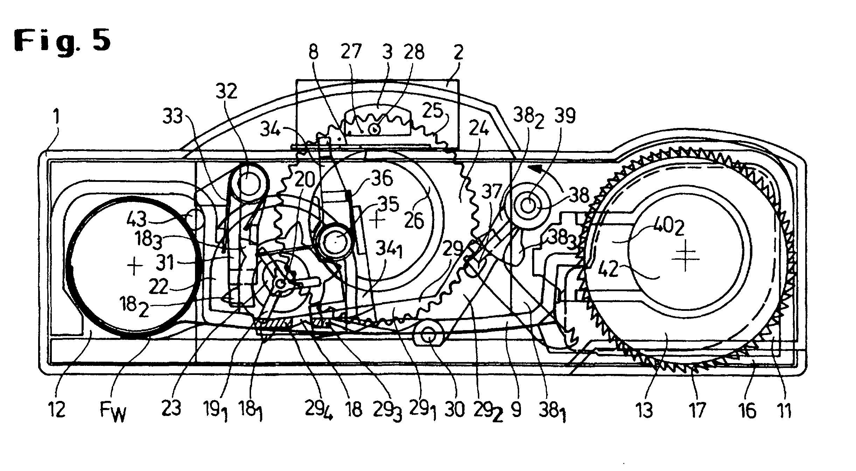

Zunächst wird im folgenden anhand von Fig. 1 bis 9 der Zeichnungen eine erste Ausführungsform einer erfindungsgemäßen, in Form einer Kamera ausgebildeten Vorrichtung beschrieben, die in Fig. 1 sowie in Fig. 5 bis 9 in unterschiedlichen Betriebszuständen schematisch dargestellt ist.

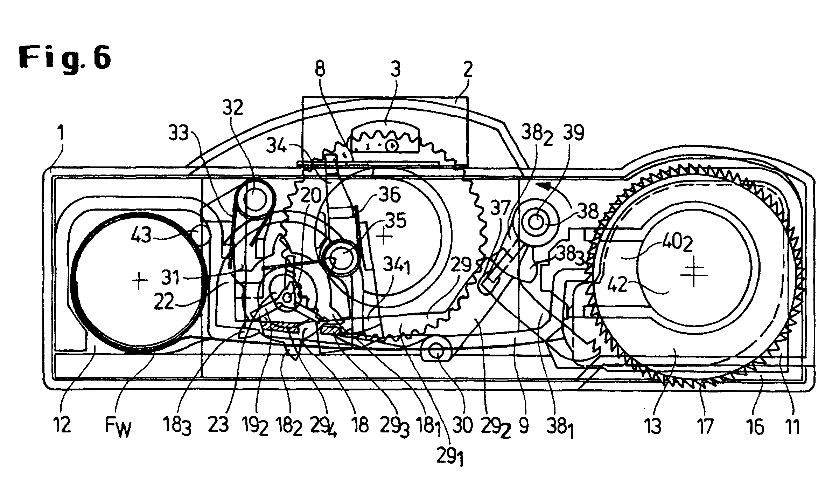

Dabei sind die Bezugszahlen zur näheren Beschreibung der weiter unten näher erläuterten Bildzähleinrichtung der Kamera nur in Fig. 5 eingetragen, hingegen in Fig. 1 sowie in Fig. 6 bis 9 aus Gründen der besseren Übersichtlichkeit der Darstellung und Beschreibung anderer Teile und Baugruppen der Kamera weggelassen. Die Bildzähleinrichtung ist jedoch nicht nur in Fig. 5, sondern auch in Fig. 1 sowie in Fig. 6 bis 9 dargestellt, so daß die diesbezüglichen Bezugszahlen von Fig. 5 auch für die jeweiligen Teile der Bildzähleinrichtung in Fig. 1 sowie in Fig. 6 bis 9 entsprechend gelten.

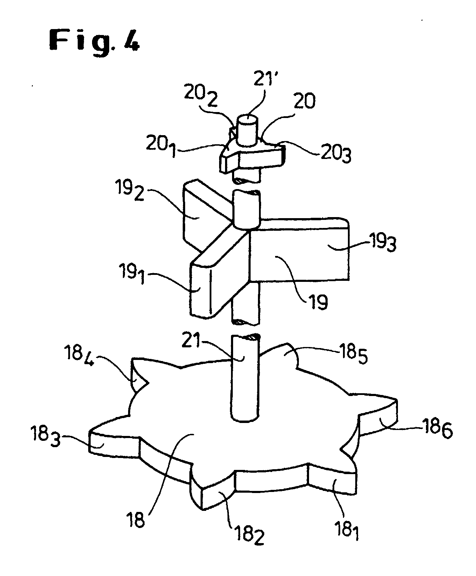

Die in Fig. 1 bis 9 der Zeichnungen dargestellte erste Ausführungsform einer erfindungsgemäßen Kamera besitzt ein Kameragehäuse 1 mit einem Objektivtubus 2. Darin befinden sich ein nur schematisch dargestelltes Objektiv 3 zur Abbildung eines Aufnahmegegenstandes auf einen in die Kamera eingelegten fotografischen Film sowie ein fotografischer Verschluß 4 zur bildmäßigen Belichtung des Filmes mit einer durch die Öffnungsdauer des Verschlusses bestimmten Belichtungszeit. Wie Fig. 3 zeigt, ist der Verschluß 4 vorzugsweise durch eine einzige Lamelle mit einer Belichtungsöffnung 7 gebildet. Die Lamelle ist unter der Wirkung einer Feder 5 um eine gehäusefeste Achse 6 schwenkbar und ragt mit einem ein Verschlußbetätigungsglied bildenden Anschlag 8 aus dem Objektivtubus 2 in das obere Gehäuseteil der Kamera. Anstelle des Ein-Lamellen-Verschlusses kann auch ein Mehr-Lamellen-Objektiwerschluß oder auch ein vor einer planen Bildebene angeordneter Schlitzverschluß vorgesehen werden, vor allem dann, wenn die Kamera als Spiegelreflexkamera ausgebildet ist. Eine nicht dargestellte, vorzugsweise einstellbare Aperturblende kann im Objektivtubus 2 als Objektivblende gesondert vorgesehen sein oder durch einen fotografischen Mehr-Lamellen-Verschluß bei dessen Öffnungsbewegung gebildet werden, so daß es sich dann um einen Blendenverschluß handelt.

Der in die Kamera eingelegte Film F weist vorzugsweise die in Fig. 13 dargestellte Konfektionierungsart auf und ist mit seinem oberen und unteren Rand im Bereich eines Aufnahme-Bildfensters der Kamera mittels zweier gekrümmter Filmführungskufen 9, 10 geführt, die in diesem Bereich eine zum Aufnahmeobjektiv 3 hin konkave Filmführungsbahn bilden. Dadurch kann die Kompensation von Abbildungsfehlern des Objektivs 3 leichter und somit dessen konstruktive Gestaltung einfacher werden. Stattdessen kann aber auch in konventioneller Weise eine plane Filmführungsbahn vorgesehen werden.

In der Darstellung in Fig. 1 sowie in Fig. 5 bis 9 der Zeichnungen wird der Film F für die Durchführung aufeinanderfolgender fotografischer Aufnahmen schrittweise von links nach rechts transportiert.

In Vorbereitung hierauf wurde schon vorher nach dem Einsetzen einer Filmkassette K in eine auf der rechten Seite des Kameragehäuses 1 angeordnete, bodenseitig durch eine nicht dargestellte Ladeklappe von außen zugängige Kassettenaufnahmekammer 11 der unbelichtete Film aus der Filmkassette herausgeschoben und ohne Belichtung von rechts nach links transportiert, so daß er in einer linksseitig angeordneten Filmspeicherkammer 12 des Kameragehäuses 1 unter Bildung eines losen Filmwickels F_{w} gespeichert wird. Jedoch bleibt das Filmende an einer im Inneren der Filmkassette K angeordneten, in den Zeichnungen nicht dargestellten Filmspule befestigt. Dieser Zustand wird im folgenden als Filmladezustand bezeichnet.

Der vorbeschriebene vorbereitende Filmtransport aus der Filmkassette K zur Filmspeicherkammer 12 hin kann durch manuelles Drehen eines kameraseitigen Filmtransportrades 13 mit seiner im Kameragehäuse 1 drehbar gelagerten Welle 14 im Drehsinn des Uhrzeigers erfolgen, wozu in an sich bekannter Weise beim Einsetzen der Filmkassette K in die Kassettenaufnahmekammer 11 des Kameragehäuses 1 ein an der Welle 14 des Filmtransportrades 13 vorgesehenes Kupplungsteil 15 mit einem in der Filmkassette stirnseitig angeordneten Kupplungsteil (nicht dargestellt) der in der Filmkassette enthaltenen Filmspule in an sich bekannter Weise in Eingriff kommt, so daß sich beim Drehen des Filmtransportrades 13 auch die hieran angekuppelte Filmspule der Filmkassette K gleichsinnig dreht.

Wird die Kamera schon vom Hersteller mit unbelichtetem Film konfektioniert (mit Linse versehener fotografischer Filmpack), so kann der Film F von vornherein so in die Kamera eingelegt werden, daß der vorbeschriebene Filmladezustand entsteht.

Von diesem Filmladezustand aus wird bei der späteren Durchführung aufeinanderfolgender fotografischer Aufnahmen der Film F von der Filmspeicherkammer 12 des Kameragehäuses 1 aus im Zuge der bildmäßigen Belichtung schrittweise von links nach rechts zur Filmkassettenaufnahmekammer 11 zurücktransportiert und in die Filmkassette K zurückgespult, wozu die Filmspule der Filmkassette K in Aufspulrichtung gedreht wird. Dies geschieht durch manuelles Drehen des Filmtransportrades 13 mit seiner Welle 14 entgegen dem Drehsinn des Uhrzeigers.

Zur Ermöglichung und Erleichterung manueller Betätigung des Filmtransportrades 13 durch den Benutzer der Kamera ragt das Filmtransportrad mit einem Teil seines Umfangs durch eine Ausnehmung 16 des Kameragehäuses 1 an dessen Rückseite etwas nach außen und besitzt am äußeren Umfang eine Rändelung 17.

Das Filmtransportrad 13 bildet somit eine Betätigungseinrichtung für den Filmtransport. Diese Betätigungseinrichtung kann in Abweichung von der gezeigten Ausbildung als Filmtransportrad in an sich bekannter Weise beispielsweise auch als Schnellschalthebel ausgebildet sein. Bei Kameras mit motorischem Antrieb kann die Betätigungseinrichtung auch als eine motorisch betätigte Filmtransporteinrichtung ausgebildet sein.

Eine im Kameragehäuse 1 angeordnete Filmablängeinrichtung umfaßt ein als Eingriffsglied bezeichnetes Perforationsrad 18 (nachfolgend auch Perforrad genannt), ferner als Filmtransport-Schaltglied ein Nockenrad 19 und als Bildzählwerk-Schaltglied ein Schaltrad 20, die auf einer gemeinsamen Welle 21 vorzugsweise dicht übereinander angeordnet oder sogar als einstückige Baugruppe ausgebildet sind. Die in Fig. 1 sowie in Fig. 5 bis 9 in der Draufsicht dargestellte Baugruppe mit dem Perforrad 18, dem Nockenrad 19, dem Schaltrad 20 und der gemeinsamen Welle 21 ist aus Gründen der besseren Übersichtlichkeit in Fig. 4 in größerem Maßstab auch noch perspektivisch dargestellt. Diese Baugruppe ist mit ihrer Welle 21 im Kameragehäuse 1 innerhalb eines in einer Gehäusezwischenwand 22 vorgesehenen Langloches 23 quer zu der durch die Filmführungskufen 9, 10 gebildeten Filmtransportbahn und somit auch quer zur Transportrichtung des Filmes F beweglich gelagert und steht unter der Wirkung einer nicht dargestellten Feder, welche diese Baugruppe in Richtung zur Filmtransportbahn zu verstellen versucht, soweit dies durch das Langloch 23 ermöglicht wird und soweit die Baugruppe an dieser Bewegung in bestimmten Betriebszuständen der Kamera nicht anderweitig in weiter unten näher beschriebener Weise gehindert ist.

Wie vor allem aus Fig. 4 ersichtlich ist, besitzt das Perforrad 18 bei der in Fig. 1 bis 9 der Zeichnungen dargestellten Ausführungsform sechs radial nach außen gerichtete Zähne 18₁ bis 18₆, die in einem gleichmäßigen gegenseitigen winkelmäßigen Abstand von 60° am Umfang des Peforrades 18 verteilt und so gestaltet sind, daß sie jeweils in Perforationslöcher des Filmes F einzugreifen vermögen, wenn in den Betriebszuständen gemäß Fig. 1, 5, 6 und 7 der Film F bei seinem Transport das Perforrad 18 passiert. Dabei entspricht der umfangsmäßige Abstand zwischen jeweils zwei benachbarten Zähnen des Perforrades 18 dem kurzen Abstand A_{I} zwischen zwei Perforationslöchern eines jeden Perforationslochpaares i₁, i₂ im Film F der in Fig. 13 gezeigten Konfektionierungsart.

Das als Filmtransport-Schaltglied wirkende sternförmige Nockenrad 19 besitzt drei verhältnismäßig lange Nocken oder Zähne 19₁, 19₂ und 19₃, die bei einer gleichmäßigen gegenseitigen Versetzung um jeweils 120° etwa deckungsgleich zu den jeweils übernächsten Zähnen 18₂, 18₄ und 18₆ des Perforrades 18 angeordnet sind und in nachfolgend näher beschriebener Weise mit benachbarten Hebeln 29 und 31 zusammenwirken. Das Nockenrad 19 kann auch die Form einer im Getriebebau üblichen Nockenscheibe mit einer der Anzahl der Zähne 19₁ bis 19₃ entsprechenden Anzahl von Nocken aufweisen.

Das als Bildzählwerk-Schaltglied wirkende Schaltrad 20 besitzt drei kurze Schaltzähne 20₁, 20₂ und 20₃, die unter sich ebenfalls einen gleichen winkelmäßigen Abstand von jeweils 120° aufweisen und zwischen Zähne eines Zahnkranzes 25 einer drehbaren Bildzählscheibe 24 eingreifen können, die auf einer gehäusefesten Achse oder auf einer im Gehäuse drehbar gelagerten Welle 26 angeordnet ist. Die Bildzählscheibe 24 trägt Anzeigemarken 27 entsprechend der Nummernfolge von Bildfeldern auf dem Film F und ist mit jeweils einer Anzeigemarke durch ein Fenster 28 im Kameragehäuse 1 sichtbar.

Einer der beiden vorgenannten Hebel 29, 31 bildet einen zweiarmigen Zwischenhebel 29, der unter Federwirkung um eine gehäusefeste Achse 30 schwenkbar ist. Der andere Hebel 31 bildet einen an seinem freien Ende nach oben gekröpften Sperrhebel, der um eine gehäusefeste Achse 32 schwenkbar ist und unter der Last einer Feder 33 steht.

Der Zwischenhebel 29 wirkt mit einem Hebelarm 29₁ sowohl mit dem vorbeschriebenen Sperrhebel 31 als auch mit einer vorzugsweise als Verschlußantriebshebel ausgebildeten Verschlußantriebseinrichtung 34 zusammen, die unter der Wirkung einer Feder 36 um eine gehäusefeste Achse 35 im Uhrzeigersinn drehbar ist und den Anschlag 8 des fotografischen Verschlusses 4 als dessen Verschlußbetätigungsglied anzutreiben vermag. Der Sperrhebel 31 läßt in seiner Stellung gemäß Fig. 1 und 5 den Zwischenhebel 29 unbeeinflußt, während er in seiner Stellung gemäß Fig. 6, 7 und 8 den Zwischenhebel 29 gegen Drehung im Uhrzeigersinn sperrt.

In eine Ausnehmung 37 eines anderen Hebelarmes 29₂ des Zwischenhebels 29 greift ein Hebelarm 38₂ eines schwenkbaren Klinkenhebels 38 ein, der auf einer Welle 39 in Übereinanderanordnung drei Hebelarme 38₁, 38₂ und 38₃ aufweist. Bei Drehung entgegen dem Uhrzeigersinn greift der Hebelarm 38₁ des Klinkenhebels 38 klinkenartig in die Rändelung 17 des Filmtransportrades 13 ein, um es gegen Betätigung in Richtung des bildmäßigen Filmtransportes zu sperren, während bei Drehung des Klinkenhebels 38 im Uhrzeigersinn das Filmtransportrad 13 zur Betätigung für den bildmäßigen Filmtransport freigegeben wird.

Wie teils in Fig. 3 und teils in Fig. 1 sowie Fig. 5 bis 9 erkennbar ist, liegt der Klinkenhebel 38 mit seinem Hebelarm 38₃ federnd an einem nach unten abgewinkelten Arm 40₁ eines winkelförmigen Auslösehebels 40 an, der um eine gehäusefeste, parallel zur Objektivachse verlaufende Achse 41 schwenkbar ist und an seinem anderen Arm 40₂ einen Auslöseknopf 42 trägt, der zur manuellen Betätigung durch den Bediener der Kamera an deren Oberseite über dem Filmtransportrad 13 angeordnet ist, ohne mit diesem fest verbunden zu sein.

Die Wirkung der oben beschriebenen Ablängeinrichtung der Kamera ist folgendermaßen:

Im Betriebszustand der Aufnahmebereitschaft der Kamera nimmt die oben beschriebene Getriebeanordnung den in Fig. 1 gezeigten Betriebszustand ein. Dabei liegt der Verschlußantriebshebel 34 mit einem nach oben ragenden Lappen 34₁ an einem nach unten ragenden Vorsprung 29₃ des Zwischenhebels 29 an und ist hierdurch entgegen der Kraft der Feder 36 gegen Drehung im Uhrzeigersinn verriegelt. Auch das Filmtransportrad 13 ist infolge Eingriffs des Hebelarmes 38₁ des Klinkenhebels 38 in die Rändelung 17 gegen Drehung entgegen dem Uhrzeigersinn und damit gegen unbeabsichtigten Filmtransport gesperrt. Der gekröpfte Sperrhebel 31 liegt am Zahn 19₂ des Nockenrades 19 an. Der Zahn 18₁ des Perforrades 18 greift in das erste, vorlaufende Perforationsloch i₁ eines Perforationslochpaares i₁, i₂ des in die Kamera eingelegten Filmes F ein.

Zur Auslösung einer fotografischen Aufnahme, d.h. zum Übergang in den Betriebszustand gemäß Fig. 5, wird der Auslöseknopf 42 vom Bediener der Kamera nach unten gedrückt, wodurch der Auslösehebel 40 entgegen der Rückstellkraft seiner Feder um die Achse 41 in der Darstellung gemäß Fig. 4 entgegen dem Uhrzeigerdrehsinn verschwenkt wird. Dies bewirkt eine Schwenkung des Klinkenhebels 38 in der Darstellung gemäß Fig. 1 und 5 bis 9 im Uhrzeigersinn, was einerseits zur Freigabe des Filmtransportrades 13 und andererseits zu einer Schwenkung des Zwischenhebels 29 entgegen dem Drehsinn des Uhrzeigers führt. Dadurch reißt der Vorsprung 29₃ des Zwischenhebels 29 vom Vorsprung 34₁ des Verschlußantriebshebels 34 ab. Somit wird der Verschlußantriebshebel 34 freigegeben, so daß dieser unter der Wirkung seiner Feder 36 bei Drehung im Uhrzeigersinn aus seiner gespannten Stellung abläuft und dabei auf den Anschlag 8 des Verschlusses 4 aufschlägt und diesen mitnimmt, bis er den sich um die Achse 6 drehenden Anschlag 8 überläuft. Der im Objektivtubus 2 angeordnete fotografische Verschluß 4 führt dabei in einer Hin- und Rückbewegung eine Öffnungs- und Schließbewegung aus und bewirkt somit eine bildmäßige Belichtung des im Belichtungsfenster des Kameragehäuses 1 befindlichen Abschnittes des Filmes F. Es findet also eine fotografische Aufnahme statt. Dabei bleibt der Sperrhebel 31 noch außer Wirkung.

Beim anschließenden Transport des Filmes F um einen Bildschritt wird zunächst eine erste Zwischenposition entsprechend einem Betriebszustand gemäß Fig. 6 erreicht. Hierzu wird das vom Klinkenhebel 38 freigegebene Filmtransportrad 13 durch manuelle Betätigung entgegen dem Uhrzeigersinn gedreht, wodurch der Film F um eine erste Teilstrecke eines Bildschrittes nach rechts transportiert wird. Dabei wird infolge Eingriffs des Zahns 18₁ des Perforrades 18 in das Perforationsloch i₁ des Films F das Perforationsrad 18 vom Film drehend mitgenommen, wobei der vorgenannte Zahl 18₁ des Perforrades 18 aus dem Perforationsloch i₁ erst dann austritt, wenn der nachfolgende Zahn 18₂ des Perforrades 18 in das Perforationsloch i₂ des Perforationslochpaares i₁, i₂ des Filmes F eingetaucht ist, weshalb die weitere Mitnahme des Perforrades 18 durch den Film F bei Weiterdrehen des Filmtransportrades 13 gesichert ist.

Da das Nockenrad 19 mit seinen Zähnen an der vom Film F bei seiner translatorischen Bewegung verursachten Drehung des Perforrades 18 entgegen dem Uhrzeigersinn aufgrund der starren Verbindung mit dem Perforrad 18 über die Welle 21 teilnimmt, gelangt der anfänglich schräg nach links unten weisende Zahn 19₁ des Nockenrades 19 an eine Endflanke des Verschlußantriebshebels 34 und dreht diesen unter Überwindung der Kraft von dessen Feder 36 in die anfängliche Spannstellung zurück, in welcher der Verschlußantriebshebel 34 mit seinem vorspringenden Lappen 34₁ durch den Vorsprung 29₃ am Zwischenhebel 29 erneut gehalten wird.

Andererseits wird bei der soeben beschriebenen Drehung des Nockenrades 19 entgegen dem Drehsinn des Uhrzeigers der Sperrhebel 31 vom Zahn 19₂ des Nockenrades 19 freigegeben, so daß dieser Sperrhebel 31 unter der Wirkung seiner Feder 33 eine Drehung entgegen dem Uhrzeigersinn ausführt, bis er an einem gehäusefesten Anschlag 43 zum Anliegen kommt. In dieser Position sperrt er den Zwischenhebel 29 mit dessen Vorsprung 29₄ gegen ein Rückdrehen im Uhrzeigersinn.

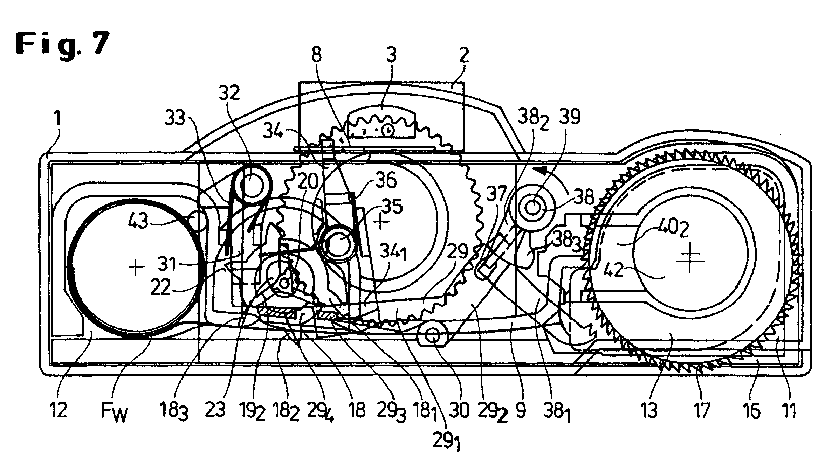

Dieser Betriebszustand bleibt erhalten, wenn bei Weiterdrehen des Filmtransportrades 13 der Film F weitertransportiert wird, bis die in Fig. 7 dargestellte weitere Zwischenposition erreicht ist und ein nächstfolgender Zahn 18₃ des Perforrades 18 auf dem Film F zum Aufliegen kommt, wie dies in Fig. 7 gezeigt ist.

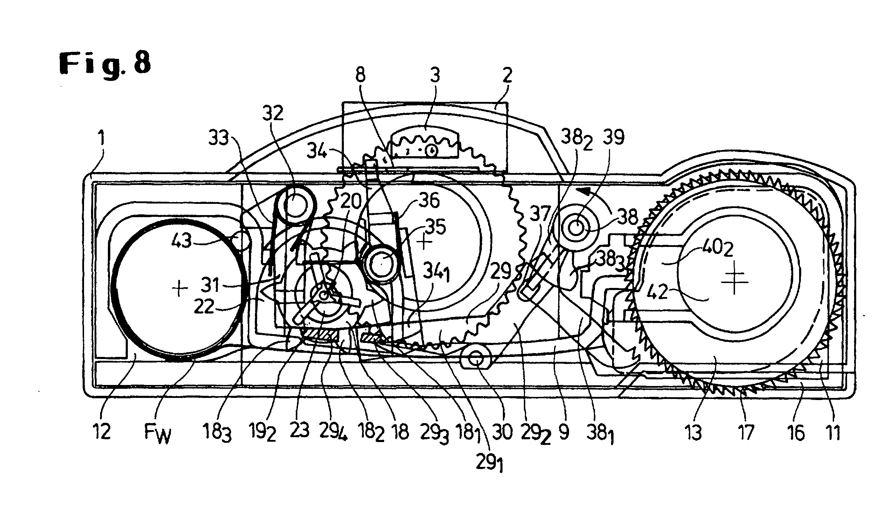

Da der Film F in seiner in Fig. 7 erreichten Zwischenposition mit einem zwischen den Perforationslöchern i₂ und (i+1)₁ liegenden Bereich dem Zahn 18₃ des Perforrades 18 gegenüberliegt, weist er somit an der Stelle, an welcher der Zahn 18₃ des Perforrades auf den Film F aufläuft, kein Perforationsloch auf. Deshalb kann dieser Zahn 18₃ beim Weitertransport des Filmes F nicht in ein solches Perforationsloch eintauchen. Andererseits ist in diesem Betriebszustand der vorauslaufende Zahl 18₂ des Perforrades 18, der vorher in das Perforationsloch i₂ des Filmes F eingetaucht war, aus diesem Perforationsloch noch nicht wieder ausgetreten, so daß das Perforrad 18 vom Film weiter drehend mitgenommen wird. Dies hat zur Folge, daß das Perforrad 18 mit seiner Welle 21 entgegen der Rückstellkraft der auf die Welle 21 wirkenden Feder um die Spitze des auf den Film F aufgelaufenen und von ihm abgestützten Zahnes 18₃ etwas verschwenkt wird, so daß die Welle 21 im Langloch 23 eine kurze Kurvenbahn quer zur Filmtransportbahn und somit quer zur Filmtransportrichtung beschreibt und dabei von der Filmtransportbahn etwas abrückt, wie dies in Fig. 8 gezeigt ist. Das Langloch 23 ist in der Gehäusezwischenwand 22 so angeordnet und gestaltet, daß es die oben beschriebene Querverstellung der Welle 21 zuläßt.

An der oben beschriebenen Querverstellung des Perforrades 18 und der Welle 21 nehmen zwangsläufig auch das Nockenrad 19 und das Schaltrad 20 teil, ohne daß die Entsperrung des Filmtransportrades 13 durch den Zwischenhebel 29 aufgehoben wird.

Die oben beschriebene Querbewegung der Welle 21 im Sinne eines Abrückens von der Filmtransportbahn findet ein Ende, wenn der Zahn 18₂ des Perforrades bei fortgesetztem Filmtransport aus dem Perforationsloch i₂ des Filmes F wieder auftaucht und dieses verläßt. Dann kommen das Perforrad 18 und mit ihm das Nockenrad 19 und das Schaltrad 20 in der Rotationsbewegung um die Längsachse der Welle 21 zum Stillstand, wobei gemäß Fig. 8 der aus dem Perforationsloch i₂ des Filmes F aufgetauchte Zahn 18₂ des Perforrades 18 bei Weitertransport des Filmes auf dessen obere Fläche aufsetzt. Dann gleitet der Film F bei dessen Weitertransport unter den auf seiner oberen Fläche aufliegenden Zähnen 18₂ und 18₃ des Perforrades 18 hindurch.

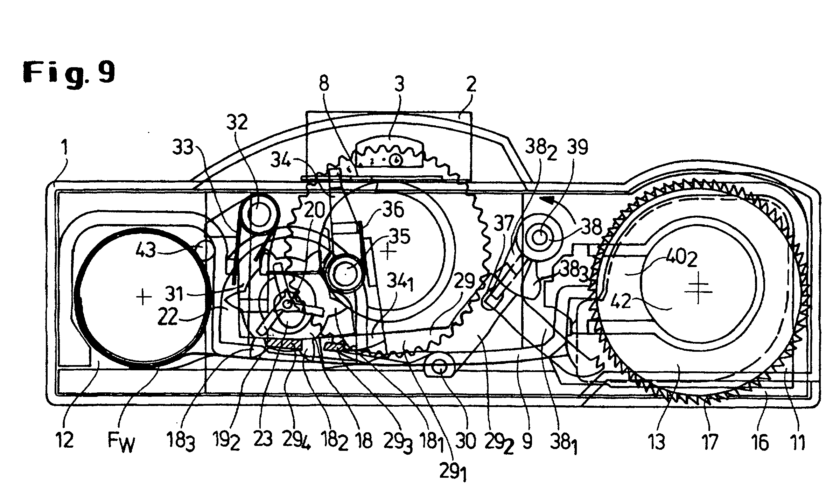

Kurz vor Ende des Filmtransportes um einen vollen Bildschritt stellt sich ein Betriebszustand ein, wie er in Fig. 9 dargestellt ist. In diesem Betriebszustand erreicht das Perforationsloch (i+1)₁ des auf das Perforationslochpaar i₁, i₂ folgenden Perforationslochpaares (i+1)₁, (i+1)₂ eine Position unmittelbar vor dem auf dem Film relativ zu ihm gleitenden Zahn 18₃ des Perforrades 18. Bei Weiterdrehen des Filmtransportrades 13 und bei entsprechendem Weitertransport des Filmes F fällt der Zahn 18₃ des Perforrades 18 in das Perforationsloch (i+1)₁ ein, wobei das Perforrad 18 und mit ihm über die Welle 21 auch das Nockenrad 19 und das Schaltrad 20 innerhalb der Begrenzungen des Langloches 23 und infolge der seitlichen Führung durch das Langloch 23 mittels der auf die Welle 21 wirkenden Rückstellfelder in Richtung zur Filmtransportbahn hin zurückgestellt werden. Hierbei legt sich der Zahn 19₃ des Nockenrades 19 an die Flanke des Sperrhebels 31 an und dreht diesen entgegen der Wirkung seiner Feder 33 in seine unwirksame Stellung zurück, so daß der Vorsprung 29₄ des Zwischenhebels 29 vom Sperrhebel 31 wieder freigegeben und der Zwischenhebel 29 entsperrt wird. Der Zwischenhebel 29 kann deshalb unter der Wirkung seiner Feder durch Verschwenken im Uhrzeigersinn in seine Ausgangslage zurückkehren. Er bewirkt dadurch ein Rückdrehen des Klinkenhebels 38 entgegen dem Uhrzeigerdrehsinn, weshalb der Hebelarm 38₁ erneut in die Rändelung 17 des Filmtransportrades 13 eingreift und dieses gegen weitere Betätigung sperrt.

Damit ist der Filmtransport um einen vollen Bildschritt abgeschlossen und für die nächstfolgende fotografische Aufnahme erneut ein Betriebszustand erreicht, wie er in Fig. 1 dargestellt ist, jedoch mit dem Unterschied, daß nicht mehr der Zahn 18₁ des Perforrades 18 in das Perforationsloch i₁ des Perforationslochpaares i₁, i₂ eingreift, sondern der übernächste Zahn 18₃ des Perforrades 18 in das Perforationsloch (i+1)₁ des jeweils nächsten Perforationslochpaares (i+1)₁, (i+1)₂ des Filmes F eintaucht, und daß die Zähne des Nockenrades 19 sowie die Zähne des Schaltrades 20 um jeweils 120° weitergerückt sind. In diesem Betriebszustand ist der Verschlußantriebshebel 34 erneut gespannt und das Filmtransportrad 13 gegen Drehung zum bildmäßigen Filmtransport erneut gesperrt.

Anschließend können die oben anhand von Fig. 1 und Fig. 5 bis 9 beschriebenen Betriebsabläufe im Zuge der nächstfolgenden fotografischen Aufnahmen sinngemäß jeweils wiederholt werden. Waren in einem bestimmten Transportzyklus, z.B. beim Transport des Filmes F um einen Bildschritt gemäß der obigen Beschreibung die Zähne 18₁, 18₂ und 18₃ des Perforrades 18 wirksam, so werden im folgenden Transportzyklen jeweils die Zähne 18₃, 18₄ und 18₅, dann die Zähne 18₅, 18₆ und 18₁ usw. wirksam.

Aus der obigen Beschreibung ergibt sich, daß das Perforrad 18 und mit ihm über die Welle 21 auch das Nockenrad 19 und das Schaltrad 20 jeweils eine Drehung um 120° pro Bildschritt ausführen. Im Zuge einer 120°-Drehung des Schaltrades 20 pro Transportzyklus kommt jeweils einer seiner drei Zähne mit dem Zahnkranz 25 der Bildzählscheibe 24 der vor allem aus Fig. 5 ersichtlichen Bildzähleinrichtung vorübergehend in Eingriff, so daß die Bildzählscheibe 24 im Zuge des Filmtransportes um jeweils einen Bildschritt jeweils um einen Zahn des Zahnkranzes 25 und somit von einer Anzeigemarke 27 zur nächsten Anzeigemarke weitergeschaltet wird, so daß eine fortlaufende Abwärts-Zählung und Anzeige der auf dem Film F für fotografische Aufnahmen noch zur Verfügung stehenden Filmabschnitte erfolgt.

Dabei ist bei der oben beschriebenen Ausführungsform durch entsprechende Anordnung der Zähne des Schaltrades 20 dafür Sorge getragen, daß die Zähne des Schaltrades 20 nicht gerade dann in den Zahnkranz 25 der Bildzählscheibe 24 eingreifen, wenn das Perforrad 18 und mit ihm über die Welle 21 auch das Schaltrad 20 innerhalb der Begrenzungen des Langloches 23 gegenüber der Filmbahn verschwenkt sind, wie dies im Betriebszustand gemäß Fig. 8 und 9 der Fall ist. In Abweichung hiervon kann jedoch auch die Querverstellung des Schaltrades 20 zum Weiterschalten der Bildzählscheibe 24 genutzt werden (nicht dargestellt).

Bei der oben beschriebenen Ausführungsform wird die intermittierende Drehung des Perforrades 18 mit den anderen auf seiner Welle 21 angeordneten Schaltelementen 19 und 20 in einzelnen Phasen des Bewegungsablaufes beim Transport des Filmes F um jeweils einen Bildschritt dadurch bewirkt, daß das Perforrad 18 infolge wechselweisen Eingriffs seiner Zähne in die Filmperforation durch den Film F bei dessen Antrieb in Transportrichtung mitgenommen wird. In Abweichung hiervon kann jedoch die Welle 21 mit den darauf angeordneten Schaltelementen 18, 19 und 20 auch durch das Filmtransportrad 13 über ein in den Zeichnungen nicht dargestelltes Verbindungsgetriebe unter Zwischenschaltung einer Rutschkupplung rotierend angetrieben werden, wobei der Film F infolge wechselweisen Eingriffs von Zähnen des Perforrades 18 in die Filmperforation bzw. Anliegen von Zähnen des Perforrades 18 an der Filmbahn lediglich die Steuerung der intermittierenden Drehbewegung übernimmt.

Die Anzahl z der Zähnedes Perforrades 18 muß nicht unbedingt sechs betragen, sondern kann auch einer anderen geraden Zahl größer als 6 oder auch kleiner als 6 entsprechen. Allgemein gilt z = 2m mit m ≥2. Dabei beträgt dann die Anzahl der unter sich jeweils gleiche Winkelabstände aufweisenden Nocken des Nockenrades 19 und des Schaltrades 20 jeweils m, d.h. die Hälfte der Anzahl der Zähne des Perforrades 18. Dabei ist aber der umfangsmäßige Abstand zwischen zwei benachbarten Zähnen des Perforrades 18 jeweils gleich dem Abstand A_{I} zwischen den Perforationslöchern eines jeden Perforationslochpaares i₁, i₂ des Filmes F.

Allgemein kann die oben beschriebene Lösung bei der bildmäßigen Vorschaltung von Filmen angewendet werden, die Perforationslöcher mit kürzeren und längeren gegenseitigen Abständen aufweisen, wobei der umfangsmäßige Abstand zwischen jeweils benachbarten Zähnen des Perforrades 18 der Kamera dem kürzeren Abstand zwischen aufeinanderfolgenden Perforationslöchern des Filmes entsprechen soll.

Die oben beschriebene Ausführungsform verkörpert beispielhaft die allgemeine Lehre, daß durch das Perforrad 18 ein drehbares Eingriffsglied gebildet wird, das quer zur Filmtransportbahn, also auch quer zur Filmtransportbahn und Transportrichtung des Filmes F verstellbar ist. Aufeinanderfolgend angeordnete Zähne des das Eingriffsglied bildenden Perforrades 18 bilden jeweils ein vorlaufendes Eingriffselement zum Eingriff in ein Perforationsloch des Filmes und ein nachlaufendes Stützelement, mit dem sich das Eingriffsglied auf dem Film oder, wie weiter unten noch näher beschrieben wird, auf einer gehäusefesten, parallel zum Film angeordneten Fläche abstützt und in Abhängigkeit von dieser Abstützung bei Drehung des Eingriffsgliedes das Verschwenken seiner Drehachse quer zur Filmtransportbahn und Filmtransportrichtung bewirkt. Beispielsweise wird in den Betriebszuständen gemäß Fig. 1 sowie Fig. 5 bis 9 ein erstes Eingriffselement durch den Zahn 18₁ und ein zweites Eingriffselement durch den Zahn 18₂ des Perforrades 18 gebildet, während ein Stützelement durch den Zahn 18₃ des Perforrades 18 gebildet wird. Dabei bildet das im Filmtransportzyklus gemäß Fig. 1 und Fig. 5 bis 9 durch den Zahn 18₃ gebildete Stützelement im darauffolgenden Filmtransportzyklus, d.h. beim nächsten Bildschritt, ein erstes Eingriffselement einer dann wirksamen Folge von Eingriffs- und Stützelementen 18₃, 18₄ und 18₅, die dann in analoger Weise wirksam werden wie die Folge von Eingriffs- und Stützelementen 18₁, 18₂ und 18₃ im vorangegangenen Filmtransportzyklus. Durch das zeitweilige Wirksamwerden eines Eingriffselementes wird das Eingriffsglied intermittierend in Drehung versetzt und durch zwischenzeitliches gleichzeitiges Wirksamwerden von Eingriffselement und Stützelement quer zur Filmtransportbahn und Filmtransportrichtung verschwenkt.

Ferner verkörpert die oben beschriebene Ausführungsform gemäß Fig. 1 bis 9 beispielhaft die allgemeine Lehre, daß das dort in Form des Perforrades 18 ausgebildete Eingriffsglied mit dem dort als Nockenrad 19 ausgebildeten Filmtransport-Schaltglied so zusammenwirkt, daß bei Querverstellung des Eingriffsgliedes von der Filmtransportbahn weg eine vorher erfolgte Entsperrung des Filmtransportrades 13 oder einer sonstigen Filmtransporteinrichtung zunächst aufrechterhalten, dann aber, wenn das Eingriffsglied in Richtung zur Filmtransportbahn hin rückverstellt wird im Sinne einer erneuten Sperrung wirksam wird.

Des weiteren verkörpert die oben beschriebene Ausführungsform gemäß Fig. 1 bis 9 beispielhaft die allgemeine Lehre, daß Eingriffselemente und Stützelemente des dort in Form des Perforrades 18 ausgebildeten Eingriffsgliedes abwechselnd und in Funktionsvertauschung auch die Wirkung von Stützelementen bzw. Eingriffselementen übernehmen können, so daß das Eingriffselement in Bezug auf Eingriffselemente und Stützelemente gleichmäßig und somit sehr einfach ausgebildet werden kann. Insbesondere können Eingriffselemente und Stützelemente des Eingriffsgliedes unter sich gleich ausgebildet sein.

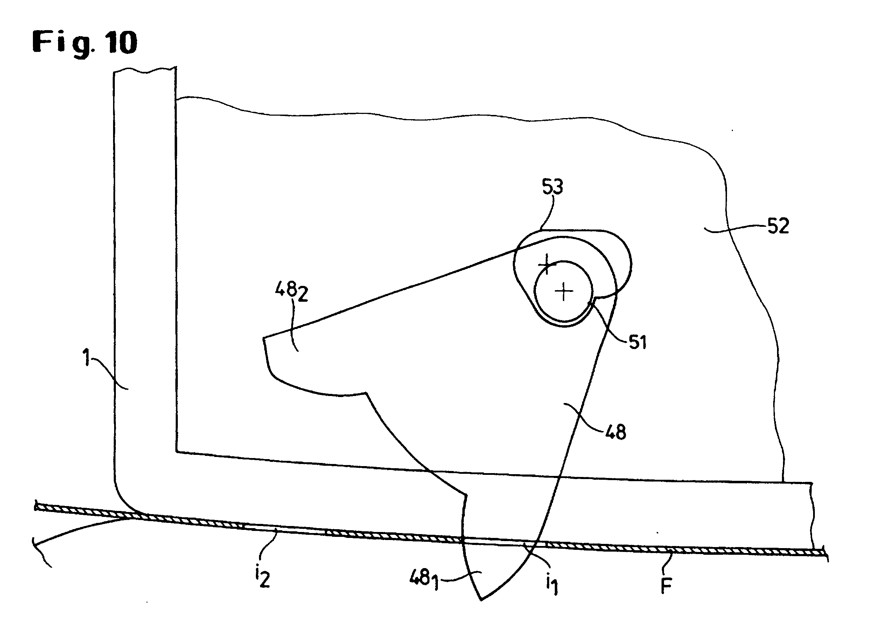

Im folgenden wird anhand von Fig. 10 bis 12 der Zeichnungen eine weitere, wenngleich etwas weniger einfache Ausführungsform einer erfindungsgemäßen, wiederum als Kamera ausgebildeten Vorrichtung beschrieben.

Diese Kamera entspricht in ihrem allgemeinen Aufbau der oben beschriebenen ersten Ausführungsform und ist in Fig. 10 bis 12 insoweit nicht mehr dargestellt. Teile einer Ablängeinrichtung dieser weiteren Ausführungsform sind in Fig. 10 bis 12 der Zeichnungen in größerem Maßstab gezeigt und werden im folgenden näher beschrieben. Diese Ablängeinrichtung ersetzt Teile der Ablängeinrichtung der oben beschriebenen ersten Ausführungsform einer Kamera.

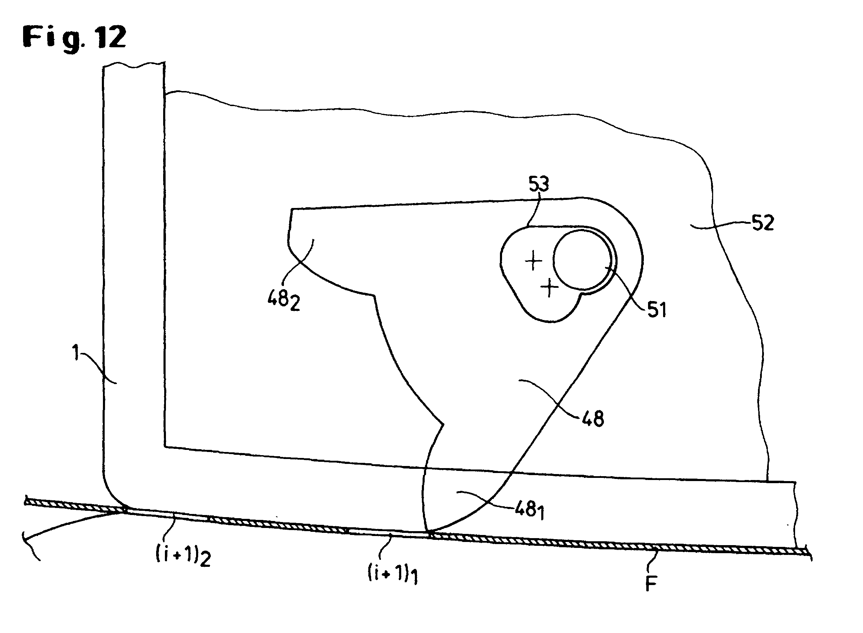

Bei dieser weiteren Ausführungsform ist anstelle des Perforrades 18 mit der Welle 21 der zuerst anhand von Fig. 1 bis 9 beschriebenen Ausführungsform ein Perforsegment 48 vorgesehen, das nur zwei Zähne 48₁ und 48₂ aufweist und mit einer Welle 51 in einem Langloch 53 einer Gehäusezwischenwand 52 auf ähnliche Weise quer zur Filmtransportbahn verstellbar ist wie das Perforrad 18 mit der Welle 21 der ersten Ausführungsform gemäß Fig. 1 bis 9. Im Gegensatz zu den Zähnen des Perforrades 18 weisen jedoch die beiden Zähne 48₁ und 48₂ der jetzt beschriebenen Ausführungsform einen gegenseitigen Abstand am Umfang 48' des Perforsegmentes 48 auf, der größer ist als der Abstand A_{I} zwischen jeweils zwei aufeinanderfolgenden Perforationslöchern i₁ und i₂ des Filmes F der in Fig. 12 dargestellten Konfektionierungsart. Der umfangsmäßige Abstand zwischen den beiden Zähnen 48₁ und 48₂ kann aber auch gleich dem Abstand A_{I} sein, wenn der zweite Zahn einen größeren Querschnitt aufweist als ein jeweiliges Perforationsloch des Filmes F und somit am Eingriff in das jeweilige Perforationsloch gehindert ist.

Auch bei dieser Ausführungsform wird im Zuge einer Betätigung des Auslöseknopfes 42 und Durchführung einer fotografischen Aufnahme das Filmtransportrad 13 entsperrt, so daß ein Filmtransportzyklus, d.h. ein Filmtransport um jeweils einen Bildschritt, beginnen kann. In diesem Betriebszustand ist der vorlaufende Zahn 48₁ des Perforsegmentes 48 in Eingriff mit dem Perforationsloch i₁ eines Perforationslochpaares i₁, i₂ des längs einer leicht konkaven Filmtransportbahn geführten Filmes F, wie dies in Fig. 10 gezeigt ist.

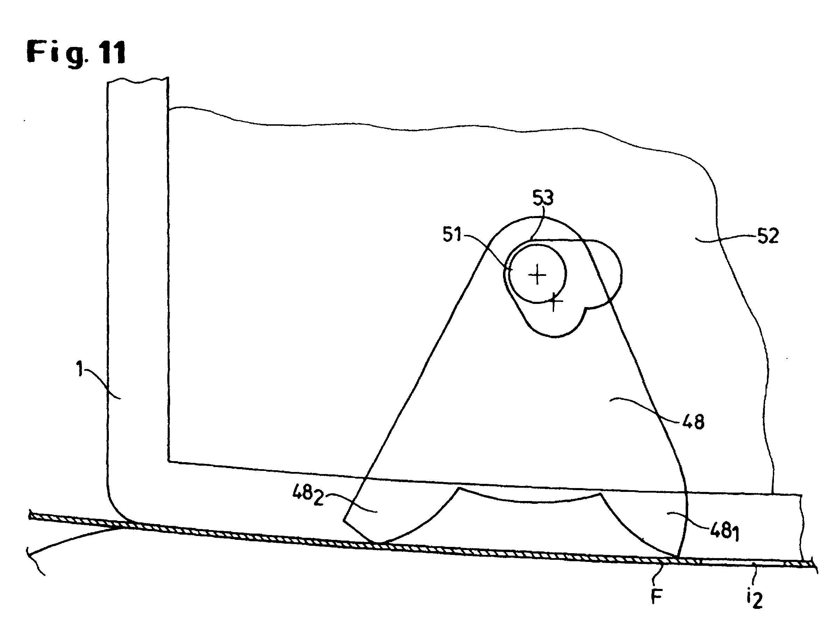

Wird daraufhin durch Betätigen des Filmtransportrades 13 eine Filmtransportbewegung eingeleitet, bleibt der vorlaufende Zahn 48₁ zunächst im Eingriff mit dem Perforationsloch i₁ des Filmes F. Der nachlaufende Zahn 48₂ gelangt erst dann an die Filmtransportbahn des Filmes F, wenn das Perforationsloch i₂ des Filmes F bei dessen Transport die Stelle der Filmbahn, an welcher der nachlaufende Zahn 48₂ auf der oberen Fläche des Filmes F zum Aufliegen kommt, bereits passiert hat. Der nachlaufende Zahn 48₂ setzt daher auf dem Film F auf und stützt sich auf ihm ab, weshalb bei Weitertransport des Filmes F eine Verschwenkung des Perforsegmentes 48 mit dessen Welle 51 quer zur Filmtransportbahn um die Spitze des Zahnes 48₂ als Drehpunkt stattfindet und innerhalb des Langloches 53 die Welle 51 dabei von der Filmbahn etwas weiter abrückt, wie dies in Fig. 11 gezeigt ist. Wenn das zweite Perforationsloch i₂ des Filmes F den ersten Zahn 48₁ passiert hat, stellt sich ein Betriebszustand ein, der mit dem Betriebszustand der ersten Ausführungsform gemäß Fig. 8 vergleichbar ist. Dabei ist das Perforsegment 48 in seiner Rotationsbewegung zum Stillstand gekommen, wobei der Film F bei dessen Weitertransport unter den beiden auf der oberen Fläche des Filmes federnd aufliegenden Zähnen 48₁ und 48₂ hindurchgleitet.

Bei dieser Ausführungsform ist auf der Welle 51 ein nicht dargestelltes Filmtransport-Schaltglied vorgesehen, das funktionsmäßig dem als Nockenrad 19 ausgebildeten Filmtransport-Schaltglied der oben beschriebenen ersten Ausführungsform entspricht und bei der Verstellung der Welle 51 quer zur Filmtransportbahn im Sinne eines Abrückens von dieser eine vorher erfolgte Entsperrung des Filmtransportrades 13 wie bei der ersten Ausführungsform zunächst aufrechterhält und eine erneute Sperrung herbeiführt, wenn nach Vollendung des Filmtransportes um einen Bildschritt und zwischenzeitlicher Überführung des Perforsegmentes 48 in die Position gemäß Fig. 12 der Zahn 48₁ des Perforsegmentes in das nächstfolgende Perforationsloch (i+1)₁ des Filmes F einfällt und das Perforsegment 48 mit seiner Welle 51 in Richtung zur Filmtransportbahn quer zu dieser rückverstellt wird.

In Fig. 12 ist der Betriebszustand gezeigt, in dem der Zahn 48₁ des Perforsegmentes 48 auf dem Film 12 aufliegt und dieser darunter hindurchgleitet, wobei der Film eine Position kurz vor Vollendung der Transportbewegung um einen Bildschritt erreicht hat, so daß der Zahn 48₁ des Perforsegmentes 48 nach kurzem Weitertransport des Filmes in dessen Perforationsloch (i+1)₁ eingreifen kann.

Damit das Perforsegment 48 nach der Querverstellung von der Filmtransportbahn weg aus der Position gemäß Fig. 11 in die Position gemäß Fig. 12 gelangt, in welcher der Zahn 48₁ zunächst auf dem Film F federnd aufliegt und bei entsprechendem Weitertransport des Filmes nach Vollendung der Transportbewegung um einen vollen Bildschritt in das nächstfolgende Perforationsloch (i+1)₁ des Filmes F eingreifen kann, wird das Perforsegment 48 aus der Position gemäß Fig. 11 vor Vollendung einer Filmtransportbewegung um einen Bildschritt in die Position gemäß Fig. 12 überführt. Dies erfolgt beispielsweise durch Zurückdrehen des Perforsegmentes 48 um die durch die Welle 51 bestimmte Achse im Uhrzeigersinn um weniger als 90°. Der dazu erforderliche Überweg des Perforsegmentes 48 quer zur Filmtransportbahn wird durch eine entsprechend große Dimensionierung des Langloches 53 in seiner Längsausdehnung ermöglicht. Statt einer Rückdrehung des Perforsegmentes 48 im Uhrzeigersinn um weniger als 90° kann auch eine Vorwärtsdrehung des Perforsegmentes 48 entgegen dem Drehsinn des Uhrzeigers um mehr als 270° aus der Position gemäß Fig. 11 in die Position gemäß Fig. 12 vorgesehen werden. Die beschriebene Rückdrehung des Perforsegmentes 48 um weniger als 90° bzw. die Vorwärtsdrehung des Perforsegmentes 48 um mehr als 270° kann durch ein nicht dargestelltes Zwischengetriebe, gegebenenfalls mit einer Reibungskupplung, vom Filmtransportrad 13 oder einem anderen Teil der Filmtransporteinrichtung abgeleitet werden.

Bei der oben beschriebenen Überführung des Perforrades 48 aus der Position gemäß Fig. 11 in die Position gemäß Fig. 12 kann die Welle 51 des Perforsegmentes in eine in Fig. 10 bis 12 schematisch dargestellte seitliche Ausbuchtung des mit seiner Längsachse quer zur Filmtransportbahn verlaufenden Langloches 53 eintreten und dadurch in einer oberen, von der Filmtransportbahn weiter abgerückten Position verbleiben, d.h. an dem oder nahe dem von der Filmtransportbahn weiter entfernten oberen Rand des Langloches 53. Trotzdem kann die Welle 51 aus dieser seitlichen Ausbuchtung des Langloches 53 wieder austreten und an den zur Filmtransportbahn näher gelegenen, unteren Rand des Langloches 53 zurückkehren, wenn der Zahn 48₁ in das Perforationsloch (i+1)₁ einfällt und somit das Perforsegment 48 mit seinem Zahn 48₁ eine Position einnimmt, die mit der Position gemäß Fig. 10 im vorangegangenen Transportzyklus vergleichbar ist.

Wird die in Fig. 10 bis 12 gezeigte seitliche Ausbuchtung des Langloches 53 oder eine andere konstruktive Ausgestaltung, durch welche im Betriebszustand gemäß Fig. 12 ein Verbleiben der Welle 51 am oder nahe dem oberen Rand des Langloches 53 bis zum Einfallen des Zahnes 48₁ in das nächstfolgende Perforationsloch des der Transportbewegung ausgesetzten Filmes F bewirkt wird, nicht vorgesehen, so kehrt die Welle 51 schon im Betriebszustand gemäß Fig. 12 an den unteren Rand des Langloches 53 zurück, also schon vor dem Eingriff des Zahnes 48₁ in das Performationsloch (i+1)₁ des Filmes F.

Bei der oben beschriebenen zweiten Ausführungsform gemäß Fig. 10 bis 12 bildet das Perforsegment 48 ein Eingriffsglied, wobei in einer beginnenden Filmtransportphase der Zahn 48₁ ein vorlaufendes Eingriffselement und der Zahn 48₂ ein nachlaufendes Stützelement bilden. Wie oben beschrieben wurde, liegt in einer abschließenden Filmtransportphase eines Filmtransportzyklus der Zahn 48₁ auf dem Film F auf.

In Abwandlung der anhand von Fig. 10 bis 12 beschriebenen Ausführungsform kann als Perforsegment 48 in nicht näher dargestellter Weise auch eine Perforscheibe mit nur einem Zahn 48₁ vogesehen werden, wobei der Radius der Perforscheibe in einem mittleren, dem Zahn 48₁ diametral gegenüberliegenden Umfangsabschnitt von etwa 270° dem Abstand zwischen der Drehachse und der Spitze des Zahnes 48₁ entspricht. Umfangsseitige Zwischenabschnitte, die in Drehrichtung gesehen unmittelbar vor und hinter dem Zahn 48₁ liegen, bilden Einschnitte mit einem um die Zahnhöhe geringeren Radius, so daß sich der Zahn 48₁ aus diesen Einschnitten heraus erhebt. Bei dieser Abwandlung der Ausführungsform gemäß Fig. 10 bis 12 wird also der zweite Zahn 48₂ zu einem breiten Segment mit einer Winkelausdehnung von mehr als 270° verbreitert.

Dabei bildet der mittlere, dem Zahn 48₁ diametral gegenüberliegende Umfangsabschnitt der als Eingriffsglied wirkenden Perforscheibe mit seiner zum Zahn 48₁ gerichteten Kante ein Stützelement, das wirkungsmäßig mit dem als Stützelement dienenden Zahn 48₂ der Ausgestaltung nach Fig. 10 bis 12 vergleichbar ist. Wird die Perforscheibe bis zu einer Position weitergedreht, die mit der Posititon des Perforsegmentes gemäß Fig. 12 vergleichbar ist, so stützt sich der mittlere Umfangsabschnitt der Scheibe während eines großen Teils dieser Drehbewegung auf dem Film F ab.

Auch bei dieser Modifikation wird durch ein nicht näher dargestelltes, mit der Perforscheibe verbundenes Schaltglied sichergestellt, daß das Filmtransportrad 13 entsperrt bleibt, solange die Welle 51 von der Filmtransportbahn weg querverstellt ist bzw. solange der Zahn 48₁ aus der Position gemäß Fig. 12 heraus noch nicht in das Perforationsloch (i+1)₁ des Filmes eingreifen kann.

Auch bei der Ausführungsform gemäß Fig. 10 bis 12 können in Abwandlung der oben beschriebenen Ausgestaltungen in nicht näher dargestellter Weise zwei oder mehrere Eingriffselemente und Stützelemente am Umfang des Perforsegmentes oder der Perforscheibe in Aufeinanderfolge angeordnet sein, wobei die geometrischen gegenseitigen Abstände und Ausbildungen entsprechend angepaßt werden.

Bei allen oben beschriebenen Ausführungsformen stützt sich das jeweilige Stützelement bei entsprechender Positition des Eingriffsgliedes unmittelbar auf dem Film ab, der an der Abstützstelle mit seiner Rückseite gehäuseseitig so abgestützt ist und/oder eine solche Eigensteifigkeit hat, daß er dem vom Abstützelement aufgrund der auf das Eingriffsglied wirkenden Rückstellfeder ausgehenden mechanischen Druck nicht ausweichen kann. Insbesondere bei der Ausführungsform nach Fig. 10 bis 12 und auch bei dessen oben beschriebener Modifizierung kann sich jedoch der Zahn 48₂ oder ein entsprechender Umfangsabschnitt einer Perforscheibe als Stützelement auch gegen eine außerhalb der Filmbahn parallel auf ihr verlaufende gehäusefeste Fläche (nicht dargestellt) abstützen, falls der Zahn 48₂ oder der entsprechende Umfangsabschnitt der Perforscheibe als Stützelement auf der Welle 51 in bezug auf den Zahn 48₁ als Eingriffselement axial versetzt und in einem axialen Bereich der Welle 51 außerhalb der Filmtransportbahn angeordenet ist.

Nachfolgend werden noch einige weitere Modifikationen beschrieben, die in den Zeichnungen nicht dargestellt sind.

Das bei der Ausführungsform gemäß Fig. 1 bis 9 mit dem Perforrad 18 verbundene, als Schaltglied wirkende Nockenrad 19 mit seinen Zähnen 19₁ bis 19₃ sowie ein entsprechendes, mit dem Perforsegment 48 verbundenes Schaltglied der Ausführungsform gemäß Fig. 10 bis 12 kann anstatt auf den Zwischenhebel 29 bei entsprechender Anpassung der gegenseitigen Anordnung und Dimensionierung auch direkt auf den Klinkenhebel 38 einwirken, um dessen Bewegung zum Eingriff in das Filmtransportrad 13 bzw. zur Freigabe dieses Filmtransportrades zu steuern. Anstatt eines als Nockenrad 19 oder dergleichen ausgebildeten Schaltgliedes kann auch die quer zur Filmbahn verstellbare Welle 21 bzw. 51 selbst als Schaltglied dienen. Dazu kann die Welle 21 beispielsweise eine als Schaltstift wirkende axiale Verlängerung 21' aufweisen, die axial über das Perforrad 18 oder über das Schaltrad 20 hinausreicht und mit einem in der Bewegungsbahn des Schaltstiftes angeordneten Hebel oder sonstigen Getriebelement zusammenwirkt. Das Schaltglied kann anstatt auf das Filmtransportrad 13 auch auf ein anderes Getriebeteil der Filmtransporteinrichtung sperrend einwirken.

Ist in der Kamera ein elektromotorischer Filmtransport vorgesehen, kann das Schaltglied bei Rückstellung des Eingriffsgliedes zur Filmtransportbahn hin einen im Stromkreis des Antriebsmotors angeordneten elektrischen Schalter steuern, der bei Betätigung den Motorstromkreis unterbricht und somit den Motor für den Filmtransport stillsetzt. Dadurch wird der Antrieb für die Filmtransporteinrichtung unwirksam und diese somit gesperrt.

Die erfindungsgemäße Lösung ist bei entsprechender Anpassung der Filmtransporteinrichtung und Filmablängeinrichtung auch dann anwendbar, wenn der Film F beim Herausschieben aus der Filmkassette K in der Darstellung von Fig. 1 sowie von Fig. 5 bis 9 schnrittweise von rechts nach links in die Filmspeicherkammer 12 des Kameragehäuses 1 unter Bildung eines losen Filmwickels F_{w} transportiert und dabei beim schrittweisen Passieren eines Belichtungsfensters in der Kamera bildmäßig belichet wird. In diesem Fall erfolgt anschließend ein Rücktransport des Filmes F von links nach rechts, wobei die Rückspulung in die Filmkasette K in einem Zug stattfinden kann, selbstverständlilch ohne nochmalige Belichtung des Filmes.

Als Film F ist in erster Linie ein in seinem chemischen und physikalischen Schichtaufbau an sich bekannter Farbnegativfilm oder Farbumkehrfilm vorgesehen, gegebenenfalls mit einer zusätzlichen Beschichtung für die magnetische Aufzeichnung zusätzlicher Daten.

Stattdessen kann als Film F aber auch ein aus der Videotechnik im Prinzip bekanntes magnetisches Bildaufzeichnungsmaterial verwendet werden, wenn die Kamera mit hierfür geeigneten optoelektronischen Lichtempfängern ausgerüstet ist.

Bei den oben beschriebenen bevorzugten Ausführungsformen einer erfindungsgemäßen fotografischen Aufzeichnungsvorrichtung handelt es sich jeweils um eine Kamera. Die erfindungsgemäße Lösung zum bildmäßigen Filmtransport ist in nicht näher dargestellter Weise auch bei fotografischen Wiedergabevorrichtungen anwendbar, z.B. bei Bildsichtgeräten und Projektionsvorrichtungen sowie auch bei einfacher gestalteten Kopiergeräten, in denen zur Wiedergabe von Bildern, die vorzugsweise auf einem Film der vorgenannten Konfektionierungsart aufgezeichnet sind, eine bildmäßige Filmfortschaltung stattfindet.

Wird in solchen fotografischen Wiedergabevorrichtungen ein elektromotorischer Antrieb für den schrittweisen Filmtransport vorgesehen, kann anstelle des Auslöseknopfes 42 der in den obigen Ausführungsbeispielen beschriebenen Kamera ein manuell betätigbarer Schalter zur Eingabe von Filmfortschaltbefehlen vorgesehen werden.

## Patentansprüche

1. Fotografische Aufzeichnungs- oder Wiedergabevorrichtung mit
(a) einer Transporteinrichtung für den bildmäßigen Transport eines Filmes längs einer Filmtransportbahn und
(b) einer Filmablängeinrichtung mit einem um eine Achse drehbaren Eingriffsglied zum Eingriff in Perforationslöcher einer Randperforation des Filmes, wobei die Filmtransporteinrichtung gesperrt wird, wenn der Film im Zuge seines Transportes eine für die Aufzeichnung oder Wiedergabe eines Bildes vorgesehene Position erreicht,
**dadurch gekennzeichnet, daß**
(c) das Eingriffsglied (18, 48) ein in bezug auf seine Drehbewegung vorlaufendes Eingriffselement (18₂; 48₁) und ein nachlaufendes Stützelement (18₃; 48₂) aufweist und in Abhängigkeit von der Abstützung des Stützelementes an einer parallel zur Filmtransportbahn verlaufenden Fläche quer zur Filmtransportbahn verstellbar ist, wobei eine vorher erfolgte Entsperrung der Film-transport einrichtung auf gehoben wird, wenn das Eingriffsglied in Richtung Filmtransportbahn zurück verstellt wird.

2. Vorrichtung nach Anspruch 1, **dadurch gekennzeichnet, daß** die Verstellung des Eingriffsgliedes (18; 48) quer zur Filmtransportbahn durch Zusammenwirken eines Stützelementes und eines Eingriffselementes des Eingriffsgliedes (18; 48) bewirkbar ist.

3. Vorrichtung nach Anspruch 1 oder 2, **dadurch gekennzeichnet, daß** die Rückstellung des Eingriffsgliedes (18; 48) quer zur Filmtransportbahn bei Eingriff eines Eingriffselementes in ein Perforationsloch des Filmes bewirkbar ist.

4. Vorrichtung nach einem der vorangehenden Ansprüche, **dadurch gekennzeichnet, daß** das Stützelement des Eingriffsgliedes (18; 48) in seiner Abstützposition auf dem Film aufliegt und der Film bei dessen Transport unter dem Abstützelement hindurchgleitet.

5. Vorrichtung nach einem der vorangehenden Ansprüche, **dadurch gekennzeichnet, daß** am Eingriffsglied (18) mehrere Eingriffselemente und Stützelemente in Folge angeordnet sind.

6. Vorrichtung nach einem der vorangehenden Ansprüche, **dadurch gekennzeichnet, daß** Eingriffselemente und Stützelemente des Eingriffsgliedes unter sich gleich ausgebildet sind.

7. Vorrichtung nach einem der vorangehenden Ansprüche, **dadurch gekennzeichnet, daß** Eingriffselemente und Stützelemente am Eingriffsglied so angeordnet sind, daß sie abwechselnd Eingriffs- und Abstützfunktionen erfüllen.

8. Vorrichtung nach einem der vorangehenden Ansprüche, **dadurch gekennzeichnet, daß** das Eingriffsglied durch ein Perforrad (18) gebildet ist, dessen in regelmäßigem gegenseitigem Abstand angeordnet Perforationszähne (18₁ bis 18₆) Eingriffselemente und Stützelemente bilden.

9. Vorrichtung nach Anspruch 8, **dadurch gekennzeichnet, daß** sie für die Verwendung von Film eingerichtet ist, bei dem Perforationslöcher einer Randperforation abwechselnd einen kleineren gegenseitigen Abstand (A_{I}) und einen größeren gegenseitigen Abstand (A_{II}) aufweisen, und die jeweils benachbarten Zähne des als Eingriffsglied wirkenden Perforrades (18) an dessen Umfang einen gleichen gegenseitigen Abstand aufweisen, welcher dem kleineren gegenseitigen Abstand (A_{I}) zwischen aufeinanderfolgenden Perforationslöchern des Filmes entspricht.

10. Vorrichtung nach Anspruch 8 oder 9, **dadurch gekennzeichnet, daß** die Anzahl der Zähne des Perforrades (18) mindestens 4 beträgt.

11. Vorrichtung nach Anspruch 1 oder 2, **dadurch gekennzeichnet, daß** ein Abstützelement (48₂) des Eingriffsgliedes (48) so angeordnet und/oder ausgebildet ist, daß es nicht in Perforationslöcher des Filmes eingreift.

12. Vorrichtung nach Anspruch 11, **dadurch gekennzeichnet, daß** sie für die Verwendung von Film eingerichtet ist, bei dem Perforationslöcher einer Randperforation abwechselnd einen kleineren gegenseitigen Abstand (A_{I}) und einen größeren gegenseitigen Abstand (A_{II}) aufweisen, und der gegenseitige Abstand zwischen einem Eingriffselement (48₁) und einem Abstützelement (48₂) des Eingriffsgliedes (48) an dessen Umfang größer ist als der kleinere gegenseitige Abstand (A_{I}) zwischen Perforationslöchern des Filmes.

13. Vorrichtung nach einem der vorangehenden Ansprüche, **dadurch gekennzeichnet, daß** ein auf die Filmtransporteinrichtung (13) einwirkendes Schaltglied in Abhängigkeit von der Verstellung des Eingriffsgliedes (18; 48) quer zur Filmtransportbahn steuerbar ist.

14. Vorrichtung nach Anspruch 13, **dadurch gekennzeichnet, daß** das Schaltglied durch eine Welle (21; 51) des Eingriffsgliedes (18; 48) gebildet ist.

15. Vorrichtung nach Anspruch 13, **dadurch gekennzeichnet, daß** das Schaltglied auf einer Welle (21; 51) des Eingriffsgliedes (18; 48) angeordnet ist.

16. Vorrichtung nach Anspruch 15, **dadurch gekennzeichnet, daß** das Schaltglied durch ein auf der Welle (21) des Eingriffsgliedes (18) angeordnetes Nockenrad (19) gebildet ist.

17. Vorrichtung nach Anspruch 16, **dadurch gekennzeichnet, daß** das Nockenrad (19) koaxial zu dem als Perforrad ausgebildeten Eingriffsglied (18) angeordnet ist und halb so viele Zähne aufweist wie das Perforrad.

18. Vorrichtung nach einem der Ansprüche 13 bis 17, **dadurch gekennzeichnet, daß** das Schaltglied mit einem Hebelgetriebe (29, 38) der Ablängeinrichtung zusammenwirkt.

19. Vorrichtung nach einem der vorangehenden Ansprüche, **dadurch gekennzeichnet, daß** das Perforrad mit einer Bildzähleinrichtung (24) zusammenwirkt.

20. Vorrichtung nach den Ansprüchen 8, 16 und 19, **dadurch gekennzeichnet, daß** das Perforrad (18), das Nockenrad (19) und/oder ein Schaltrad (20) der Bildzähleinrichtung (24) zusammen mit der Welle (21) einstückig ausgebildet sind.

21. Vorrichtung nach einem der Ansprüche 13 bis 20, **dadurch gekennzeichnet, daß** das Schaltglied mit einer Verschlußantriebseinrichtung (34) zusammenwirkt.

22. Vorrichtung nach einem der vorangehenden Ansprüche, **dadurch gekennzeichnet, daß** sie als Kamera ausgebildet ist.

## Claims

1. Photographic recording or reproducing device having
(a) a transport device for transporting a film image by image along a film transport path and
(b) a film length stop device having an engagement element that can be rotated about an axle to engage in perforations belonging to an edge perforation of the film, the film transport device being blocked when the film, in the course of its transport, reaches a position envisaged for the recording or reproduction of an image,
**characterized in that**
(c) the engagement element (18, 48) has an engaging element **(18**_{**2**}**; 48**_{**1**}**)** which leads in relation to its rotational movement and a supporting element (18₃; 48₂) which trails and, depending on the support of the supporting element on a surface running parallel to the film transport path, can be displaced transversely with respect to the film transport path, previously effected unlocking of the film transport device being cancelled when the engagement element is displaced back in the direction of the film transport path.

2. Device according to Claim 1, **characterized in that** the displacement of the engagement element (18; 48) transversely with respect to the film transport path can be effected by the interaction of a supporting element and an engaging element of the engagement element (18; 48).

3. Device according to Claim 1 or 2, **characterized in that** the action of resetting the engagement element (18; 48) transversely with respect to the film transport path can be effected as an engaging element engages in a perforation in the film.

4. Device according to one of the preceding claims, **characterized in that** the supporting element of the engagement element (18; 48) bears on the film when in its supporting position, and the film slides through under the supporting element as it is transported.

5. Device according to one of the preceding claims, **characterized in that** a plurality of engaging elements and supporting elements are arranged in sequence on the engagement element (18).

6. Device according to one of the preceding claims, **characterized in that** engaging elements and supporting elements of the engagement element are of identical design.

7. Device according to one of the preceding claims, **characterized in that** engaging elements and supporting elements are arranged on the engagement element in such a way that they alternately fulfil engagement and supporting functions.

8. Device according to one of the preceding claims, **characterized in that** the engagement element is formed by a perforation wheel (18), whose perforation teeth (18₁ to 18₆) arranged at a regular mutual spacing form engaging elements and supporting elements.

9. Device according to Claim 8, **characterized in that** it is set up for the use of film in which perforations of an edge perforation alternately have a smaller mutual spacing (A_{I}) and a larger mutual spacing (A_{II}), and the respectively adjacent teeth of the perforation wheel (18) acting as an engagement element have on its circumference the same mutual spacing, which corresponds to the smaller mutual spacing (A_{I}) between successive perforations of the film.

10. Device according to Claim 8 or 9, **characterized in that** the number of teeth of the perforation wheel (18) is at least 4.

11. Device according to Claim 1 or 2, **characterized in that** a supporting element (48₂) of the engagement element (48) is arranged and/or constructed in such a way that it does not engage in perforations of the film.

12. Device according to Claim 11, **characterized in that** it is set up for the use of film in which perforations of an edge perforation alternately have a smaller mutual spacing (A_{I}) and a larger mutual spacing (A_{II}), and the mutual spacing between an engaging element (48₁) and a supporting element (48₂) of the engagement element (48) is greater on its circumference than the smaller mutual spacing (A_{I}) between perforations of the film.

13. Device according to one of the preceding claims, **characterized in that** a switching element that acts on the film transport device (13) can be controlled on the basis of the displacement of the engagement element (18; 48) transversely with respect to the film transport path.

14. Device according to Claim 13, **characterized in that** the switching element is formed by a shaft (21; 51) of the engagement element (18; 48).

15. Device according to Claim 13, **characterized in that** the switching element is arranged on a shaft (21; 51) of the engagement element (18; 48).

16. Device according to Claim 15, **characterized in that** the switching element is formed by a cam wheel (19) arranged on the shaft (21) of the engagement element (18).

17. Device according to Claim 16, **characterized in that** the cam wheel (19) is arranged coaxially with the engagement element (18) formed as a perforation wheel and has half as many teeth as the perforation wheel.

18. Device according to one of Claims 13 to 17, **characterized in that** the switching element interacts with a lever mechanism (29, 38) belonging to the length stop device.

19. Device according to one of the preceding claims, **characterized in that** the perforation wheel interacts with an image counting device (24).

20. Device according to Claims 8, 16 and 19, **characterized in that** the perforation wheel (18), the cam wheel (19) and/or a switching wheel (20) of the image counting device (24) are formed in one piece together with the shaft (21).

21. Device according to one of Claims 13 to 20, **characterized in that** the switching element interacts with a shutter drive device (34).

22. Device according to one of the preceding claims, **characterized in that** it is constructed as a camera.

## Revendications

1. Dispositif d'enregistrement ou de reproduction d'images, comportant :
(a) un dispositif de transport pour le transport image par image d'un film le long d'un parcours de transport et
(b) un dispositif de déroulement du film qui présente un organe d'engagement apte à tourner autour d'un axe pour s'engager dans des trous perforés d'une perforation de bordure du film, le dispositif de transport du film étant bloqué lorsqu'au cours de so transport, le film a atteint une position prévue pour l'enregistrement ou la reproduction d'une image
**caractérisé en ce que**
(c) l'organe d'engagement (18, 48) présente un élément d'engagement (18₂ ; 48₁) situé en avant dans son déplacement de rotation et un élément d'appui (18₃ ; 48₂) situé en arrière et apte à être déplacé transversalement par rapport au parcours de transport du film en fonction de l'appui de l'élément d'appui contre une surface qui s'étend parallèlement au parcours de transport du film, un blocage, réalisé précédemment, du dispositif de transport du film étant supprimé lorsque l'organe d'engagement est reculé en direction du parcours de transport du film.

2. Dispositif selon la revendication 1, **caractérisé en ce que** le déplacement de l'organe d'engagement (18 ; 48) transversalement par rapport au parcours de transport du film peut être actionné par la coopération entre un élément d'appui et un élément d'engagement de l'organe d'engagement (18 ; 48).

3. Dispositif selon la revendication 1 ou 2, **caractérisé en ce que** le recul de l'organe d'engagement (18 ; 48) transversalement par rapport au parcours de transport du film peut être activé lors de l'engagement d'un élément d'engagement dans un trou perforé du film.

4. Dispositif selon l'une des revendications précédentes, **caractérisé en ce que** l'élément d'appui de l'organe d'engagement (18 ; 48) repose sur le film dans sa position d'appui, le film glissant en dessous de l'élément d'appui lors de son transport.

5. Dispositif selon l'une des revendications précédentes, **caractérisé en ce que** plusieurs éléments d'engagement et plusieurs éléments d'appui sont disposés en succession sur l'organe d'engagement (18).

6. Dispositif selon l'une des revendications précédentes, **caractérisé en ce que** les éléments d'engagement et les éléments d'appui de l'organe d'engagement présentent une configuration identique.

7. Dispositif selon l'une des revendications précédentes, **caractérisé en ce que** les éléments d'engagement et les éléments d'appui sont disposés sur l'organe d'engagement de telle sorte qu'ils remplissent en alternance une fonction d'engagement et une fonction d'appui.

8. Dispositif selon l'une des revendications précédentes, **caractérisé en ce que** l'organe d'engagement est formé par une roue à perforations (18) dont des dents à perforations (18₁ à 18₆) disposées à distance mutuelle régulière forment les éléments d'engagement et les éléments d'appui.

9. Dispositif selon la revendication 8, **caractérisé en ce qu'**il est conçu pour l'utilisation d'un film dans lequel des trous perforés d'une perforation de bord dur présentent en alternance une petite distance mutuelle (A_{I}) et une grande distance mutuelle (A_{II}), les dents voisines de la roue à perforations (18) qui agit comme organe d'engagement présentant à la périphérie de cette dernière un écart mutuel identique qui correspond au petit écart mutuel (A_{I}) entre des trous perforés successifs du film.

10. Dispositif selon la revendication 8 ou 9, **caractérisé en ce que** le nombre des dents de la roue à perforations (18) vaut au moins 4.

11. Dispositif selon la revendication 1 ou 2, **caractérisé en ce qu'**un élément d'appui (48₂) de l'organe d'engagement (48) est disposé et/ou configuré de manière à ne pas s'engager dans le trou perforé dans le film.

12. Dispositif selon la revendication 11, **caractérisé en ce qu'**il est conçu pour l'utilisation d'un film dans lequel des trous perforés d'une perforation de bordure présentent alternativement un petit écart mutuel (A_{I}) et un grand écart mutuel (A_{II}), la distance mutuelle entre un élément d'engagement (48₁) et un élément d'appui (48₂) de l'organe d'engagement (48) à la périphérie étant plus grand que le petit écart mutuel (A_{I}) entre les trous perforés dans le film.

13. Dispositif selon l'une des revendications précédentes, **caractérisé en ce qu'**un organe d'actionnement agissant sur le dispositif (13) de transport du film peut être commandé en fonction du déplacement de l'organe d'engagement (18 ; 48), transversalement par rapport au parcours de transport du film.

14. Dispositif selon la revendication 13, **caractérisé en ce que** l'organe d'actionnement est formé par un arbre (21 ; 51) de l'organe d'engagement (18 ; 48).

15. Dispositif selon la revendication 13, **caractérisé en ce que** l'organe d'actionnement est disposé sur un arbre (21 ; 51) de l'organe d'engagement (18 ; 48).

16. Dispositif selon la revendication 15, **caractérisé en ce que** l'organe d'actionnement est formé par une roue à cames (19) disposée sur l'arbre (21) de l'organe d'engagement (18).

17. Dispositif selon la revendication 16, **caractérisé en ce que** la roue à cames (19) est disposée coaxialement par rapport à l'organe d'engagement (18) configuré sous la forme d'une roue à perforations et présente un nombre de dents qui vaut la moitié de celui de la roue à perforations.

18. Dispositif selon l'une des revendications 13 à 17, **caractérisé en ce que** l'organe d'actionnement coopère avec une transmission à levier (29, 38) du dispositif de déroulement.

19. Dispositif selon l'une des revendications précédentes, **caractérisé en ce que** la roue à perforations coopère avec un dispositif (24) de comptage d'images.

20. Dispositif selon les revendications 8, 16 et 19, **caractérisé en ce que** la roue à perforations (18), la roue à cames (19) et/ou une roue d'actionnement (20) du dispositif (24) de comptage d'images sont configurées d'un seul tenant avec l'arbre (21).

21. Dispositif selon l'une des revendications 13 à 20, **caractérisé en ce que** l'organe d'actionnement coopère avec un dispositif (34) d'entraînement de fermeture.

22. Dispositif selon l'une des revendications précédentes, **caractérisé en ce qu'**il est configuré comme appareil photographique.
